# EUROPEAN PATENT APPLICATION

(11) **EP 2 154 641 A1**
(43) Date of publication of application: **17.02.2010**
(21) Application number: 08014531.1
(22) Date of filing: 14.08.2008
(51) Int. Cl.: G06Q 30/00

(54) **Method and device for converting messages between different data formats**

(71) Applicant: Crossgate AG, 82319 Starnberg (DE)
(72) Inventor: Neben, Uwe, 37124 Rosdorf / Göttingen (DE)
(74) Representative: Bach, Alexander

(57) **Abstract**

A computer-implemented method for converting messages between different data formats in a network for electronic data interchange (EDI), comprises the steps:
- receiving (110) an electronic message from a participant of the network;
- determining (120) at least one first possible data format of the electronic message, based on the content of the electronic message;
- validating (130) the electronic message, based on the at least one first possible data format; and
- converting (140) the message from the first data format into a second predetermined data format, if the validating step succeeds.

## Description

The present invention relates to the field of Electronic Data Interchange (EDI). More particularly, it relates to a computer-implemented method and a device for automatically converting messages between different data formats. The present invention also relates to a computer-implemented tool for generating new routines or modules automatically, given a sample message and a database of given modules for automatically converting messages between different data formats.

### TECHNICAL BACKGROUND AND STATE OF THE ART

Electronic Data Interchange (EDI) may be defined as the computer-to-computer interchange of strictly formatted messages that represent documents. EDI implies a sequence of messages between two parties, either of whom may serve as originator or recipient. The formatted data representing the documents may be transmitted from originator to recipient by telecommunications or physically transported on electronic storage media.

In EDI, the usual processing of received messages is by computer only. Human intervention in the processing of a received message is typically intended only for error conditions, for quality review and for special situations. For example, the transmission of binary or textual data is not EDI according to this definition, unless the data are treated as one or more data elements often EDI message and are not normally intended for human interpretation as part of online data processing (Kantor, M. et al., April 29, 1996, Electronic Data Interchange EDI, National Institute of Standards and Technology).

In order to be interpretable by the receiver, message data formats must conform to a known structure. Nowadays, a large number of different formats exist for EDI messages, e.g. SWIFT (for banks), UN/EDIFACT, ANSI ASC X12, GTDI, VDA, ODETTE, Fortras, etc, for different application fields and branches. Generally, a data format is characterized by a message's syntax and its semantics, wherein the syntax defines the structure of the message in terms of message components and their ordering and the semantics define the interpretation or meaning of the message components.

Due to the multitude of alternative data formats, it is very likely that two participants planning to interchange electronic data will use different formats for their messages. Consequently, messages must be converted from the sender's data format to the receiver's data format, such that the receiving system is able to interpret and process the message correctly. This complexity is aggravated due to the multitude of potential or actual participants in an electronic data interchange system. Consequently, reducing the amount of human intervention in the construction of systems for electronic data interchange and providing efficient mechanisms for their operation is an important condition for their functioning.

According to the state of the art, modules for automatically converting messages or data between different formats have been built by hand, by a skilled person knowing both the data format of the sender and the data format of the receiver, e.g. a programmer. These message mapping modules or schemes, also called converters, have a fixed association with a particular sender/receiver and convert a message from one format to another, thereby changing its syntax, its semantics and also the content possibly.

When associated with a particular sender or receiver, the message mapping modules or converters may also be called participant or partner modules. In other words, message mapping systems according to the state of the art invoke a matching message conversion scheme based on the identity of the sender/receiver and the message format that is associated with them. As every sender and every receiver may use a different format for the same messages or data, potentially a large number of modules for automatically converting messages between different formats must be created and pre-installed.

In the prior art, two approaches have been made in order to alleviate this complexity. First, intermediate formats have emerged, to which original input message or data formats are mapped first and from which the necessary output message or data formats are generated. Creating such a meta- or 'hub'-format obviates the need of having modules for converting between formats for each pair of participants in a system for electronic data interchange and reduces the associated complexity at least in part.

Second, libraries/repositories of already existing modules for automatically converting data or messages between different formats are used. Such a module library/repository or database may often further reduce the task of creating a new module to selecting a most suitable or similar module from the library/repository and adapting it to a new message format.

However, in both cases, manual work for creating new modules or for searching, selecting and adapting existing modules, and for assigning them to participants of the network, remains an important cost factor and a major obstacle for the adoption and the spread of systems for electronic data interchange.

It is therefore an object of the present invention to provide a method and a system for automatically converting messages or data between different formats that reduces the necessary amount of human intervention in creating mappings between different formats. The method must also be adaptive in order to accommodate changing message format standards.

Finally, it is a further object of the invention, to provide a tool for an electronic data interchange systems programmer or configurator that allows him to identify and select modules for automatically converting messages between different message or data formats existing in a module library, for adaptation to new message formats.

### BRIEF SUMMARY OF THE INVENTION

According to the invention, these objects are achieved by a method and a system according to the independent claims. Advantageous embodiments are defined in the dependent claims.

According to an aspect of the invention, a computer-implemented method for converting messages between different data formats in a network for electronic data interchange (EDI), may comprise the steps of receiving (110) an electronic message from a participant of the network; determining (120) at least one first possible data format of the electronic message, based on the content of the electronic message; validating (130) the electronic message, based on the at least one first possible data format; and converting (140) the message from the first data format into a second predetermined data format, if the validating step succeeds. The at least one first possible data format may be determined automatically. Thereby, new participants may be integrated into the electronic data interchange system without manual intervention of a system administrator, associating a particular participant with a particular data format manually.

According to a second aspect of the invention, the method may determine a plurality of first possible data formats of the electronic message, e.g. based on a likelihood, that the message complies with a given data format. The fact that a plurality of first possible data formats is automatically determined, instead of one, may be compensated by validating each of the entire determined set of possible data formats, resulting again in one single data format, if validation succeeds.

According to a third aspect of the invention, the at least one possible data format may be determined from a machine-readable non-volatile memory comprising a multitude of possible data formats. By leveraging an existing database of possible data formats, the determination of possible data formats may be reduced to a search in the database. The probability of successfully determining and validating a matching data format may also be increased by simply extending the database.

According to a further aspect, the step of converting may comprise the steps of retrieving a predetermined message mapping scheme associated with the first data format; and applying the predetermined message mapping scheme to the electronic message in order to convert it into the second data format. Thereby, a time-consuming explicit search or ad-hoc synthesis of a message mapping or conversion scheme may be avoided.

According to yet another aspect of the invention, an association of the participant and the first data format may be stored in a machine-readable non-volatile memory for future reference, if the validating step succeeds. When a single data format is associated with several participants, this allows an efficient storage of data formats ('call-by-reference'). Moreover, changes in the data format only have to be effected once and become immediately valid for all associated participants.

According to a different aspect of the invention, the step of determining may comprise the steps of checking, whether an association of the participant and an associated data format has already been stored in the machine-readable non-volatile memory; and using the associated data format as the at least one possible data format of the electronic message, if yes. By associating a participant with one or a fixed set of several data-formats, the determination of the data-format of an electronic message may take the identity of the sending participant into account, thereby reducing e.g. necessary search operations for a pertinent data format.

According to still another aspect of the invention, the step of validating may comprise the steps of automatically requesting the participant to confirm the first data format via an electronic communication channel; and validating the electronic message if the first data format is confirmed by the participant. In particular when the results of an automatic data format determination module or step may not be trusted per se or more than one data format is determined, this aspect provides the advantage of automatically leveraging a participant's input. Additionally, the electronic message may also be validated automatically, using the confirmed data format and validation rules associated with it, thereby validating the participant's confirmation in turn and hence providing an additional level of security. In a specific embodiment, a request for confirming a data format for an invoice may comprise sending an actual invoice document generated using the data format to be confirmed, e.g. as a fax or pdf document to the participant and asking whether the actual invoice document conforms to the participants intentions. Thereby, even a participant who is ignorant of the concrete data fomat may validate a determined data format, by validating the results of actually applying it.

The data format may be determined based on a proper subset of bits of the electronic message, having a predetermined size. The subset of bits may be an initial bit sequence of the electronic message. Hereby, the fact that the initial bit sequence has the highest discriminating power in EDI messages may be exploited, leading to better recognition rates. The data format may further be determined based on statistical evaluations of the electronic message, e.g. on the number of angular brackets or '<' and '>'signs in a message, wherein a high number indicates an XML-document or the number of colons or ':' signs, indicating an EDI document. Using this additional information, cases of doubt may be resolved when the (initial) bit sequence is not decisive.

According to another aspect of the invention, the first possible data format of the electronic message may be determined using a neural network. By this, associations between contents of an electronic message and data formats may be learned automatically by a supervised learning algorithm, thereby rendering the method e.g. adaptive with respect to later additions of new data formats or changes within already existing data formats. Also, neural networks have the capability to generalize from a set of training samples, thereby reducing a complexity of the system when compared with a hard-wiring approach. Also, data format recognition does not fail due to a rigid recognition step. The fact that the neural network may determine a plurality of first possible data formats may be compensated by validating each of the entire determined set of possible data formats, resulting again in one single data format, if validation succeeds.

According to the invention, a system for converting messages between different data formats in a network for electronic data interchange (EDI), may comprise a back-end server and a front-end server, the front-end server comprising means for receiving an electronic message from a participant of the network; means for determining at least one first possible data format of the electronic message; means for validating the electronic message, based on the at least one first possible data format; and means for converting the message from the first data format into a second predetermined data format, if the validating step succeeds.

### BRIEF DESCRIPTION OF THE FIGURES

These and other aspects and advantages of the present invention will become more apparent when studying the following detailed description of an embodiment of the invention, in connection with the attached drawing in which
- Fig. 1: shows a flowchart of a method for converting messages between differ- ent formats according to an embodiment of the invention.
- Fig. 2a: shows an excerpt of a message processed by a method according to the invention.
- Fig. 2b: shows an excerpt of a rule set definition that is selected based on the recognized format of the incoming message and may be used for vali- dating the message.
- Fig. 3: shows a multilayer neural network used for determining a data format of a message according to an embodiment of the invention.
- Fig. 4: shows a table defining a set of mapping rules for mapping the contents of the incoming message to a different format.
- Fig. 5: shows an architecture 500 of an application system for converting mes- sages according to an embodiment of the invention.

### DETAILED DESCRIPTION

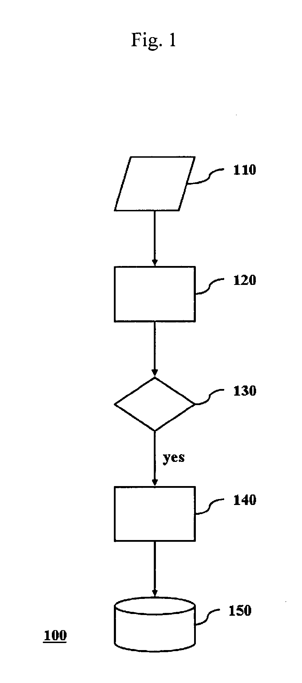

**Figure 1** shows a flowchart of a method for converting messages between different formats according to an embodiment of the invention.

In step 110, a message having a given data format is received form a participant in a network for electronic data interchange. The data format of the electronic message may be unknown.

In step 120, a format of the message may be determined or recognized by analyzing the message. Preferably, the determination step determines at least one possible data format for the electronic message. However, it may also be desirable to generate a plurality of possible first data formats for the electronic message, e.g. based on a likelihood assessment or by using an expert system.

In step 130, the message is validated, based on the determined format. The step of validating may comprise checking whether the syntax of the message complies with the identified data format. In another embodiment, the step of validating may comprise applying a set of validation rules to the message, wherein the validation rules are associated with the determined data format.

If the message is found valid, the method proceeds to step 140. Otherwise, the procedure may raise an exception indicating that the message is not valid.

In the case where a plurality of possible data formats is determined, the validation step may be repeated for all members of the plurality of data formats. Assuming that the formats are disjoint, i.e. that a message always belongs to a single format, the plurality of data formats may then be reduced by validation to a single format.

According to a preferred embodiment of the invention, the step of validating the message may comprise the further steps of retrieving a module for automatically converting messages between different data formats associated with the determined format. The module may comprise rules for validating the message. Validating then comprises applying these format-specific rules comprised in the module.

In step 140, the message is automatically converted from the input format to an output format associated with the determined input format. In a preferred embodiment, the format of the message is converted to an internal standard format for further processing.

In a preferred embodiment, the step of automatically converting uses the above-mentioned module, which may further comprise format-specific definitions for mapping the input format to an output format.

Optionally, the automatically converted message may be written to an intermediate storage **150,** before further processing.

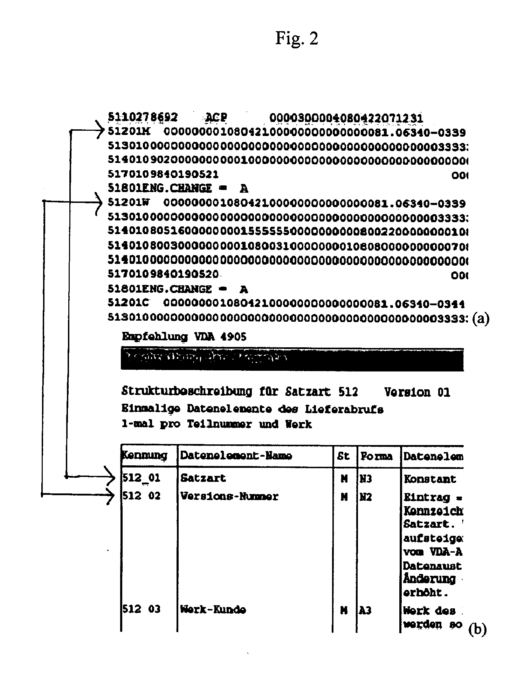

**Figure 2a** shows an excerpt of a message processed by a method according to the invention.
**Figure 2b** shows an excerpt of a rule set definition that is selected based on the determined format of the received message and may be used for validating the message. The arrows indicate correspondences between different parts of the message and the associated rules.

The rule definition may be kept in the system as a binary file, for rapid processing. If validation fails, the whole process may be cancelled by raising an exception.

In one embodiment of the invention, the message may be recognized in step 120 by a neural network. In a preferred embodiment, the neural network is a multi-layer perceptron. A multi-layer perceptron comprises, besides an input and an output layer, also further hidden layers that define an input-to-output mapping of the neural network.

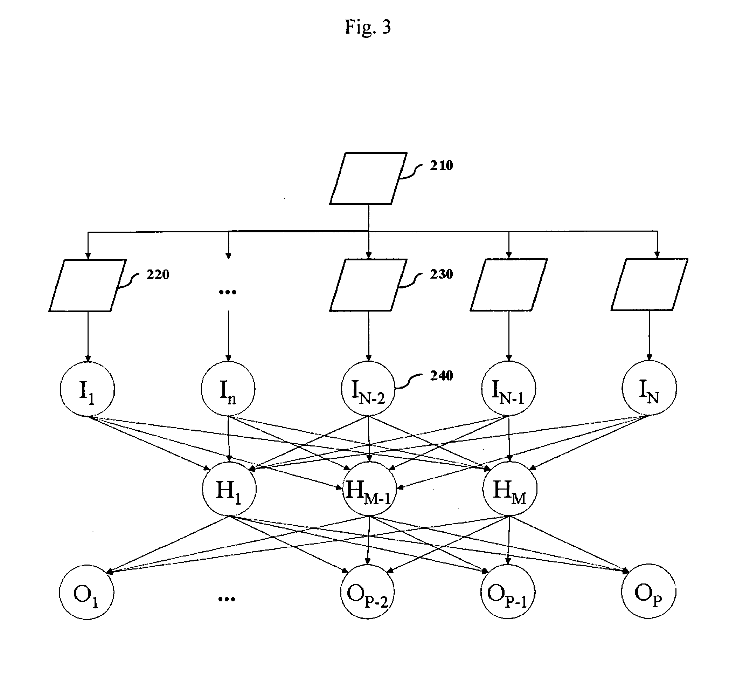

**Figure 3** shows a multilayer neural network used for determining a data format of a message according to an embodiment of the invention

The received message 310 is first processed to obtain inputs 320, 330 etc. for different input nodes of the multi layer neural network. In other words, a feature map may be applied to the electronic message in order to extract a feature vector whose components are indicative of the possible message format.

For example, the first input 320 to the neural network may be given by a proper subset of bits of the received electronic message. Preferably, the proper subset of bits is an initial sequence of bits of the electronic message, as EDI messages usually include identifying content at the beginning of the message. Moreover, input 330 may comprise the results of statistical evaluations of the electronic message, for example the number of brackets or colons used in the messages, which indicate different data formats (XML, EDI or others). The inputs obtained from processing the received electronic message or the feature vector components are then individually fed into the different input nodes I₁, ..., IN of the neural network. The neural network shown in figure 3 comprises a single hidden layer of so-called hidden neurons H₁, ..., H_{M}. Each input neuron is mapped to each hidden neuron first. Then the output of each hidden neuron is mapped to each of the so-called output neurons O₁ to O_{P}..

In a particular embodiment, a perceptron may comprise an input and an output layer and two (2) layers of hidden neurons. Every layer may comprise 512 neurons. Every neuron of a particular layer is fully connected with every neuron of the next layer (feedforward network). Thus, this particular network has 786.000 nodes, each node having an individual weight. Hence, the neural network may address 512 different formats uniquely. In total, 2⁵¹² different formats may be addressed by a neural network

Likewise, 2⁵¹² different formats may be input into the neural network for recognition. In a basic embodiment, the first 512 bits of a message may be input into the system.

However, in a preferred embodiment of the invention, the entire content of the message may be subjected to a statistical evaluation. The result may be represented by a 240 bit value, input to the neural network. Also, 276 bits representing selected contents of the message, e.g. bits from different positions of the message, are input to the network. Thereby, 2²⁴⁰ * 2²⁷⁶ different input formats may be recognized. Structural criteria as well as the content of the message may be used for format recognition.

The network may be trained using a backpropagation method. Only the input message and the expected result are needed for this training. Tests of the inventors have shown that different formats may correctly be recognized after around 20 training cycles.

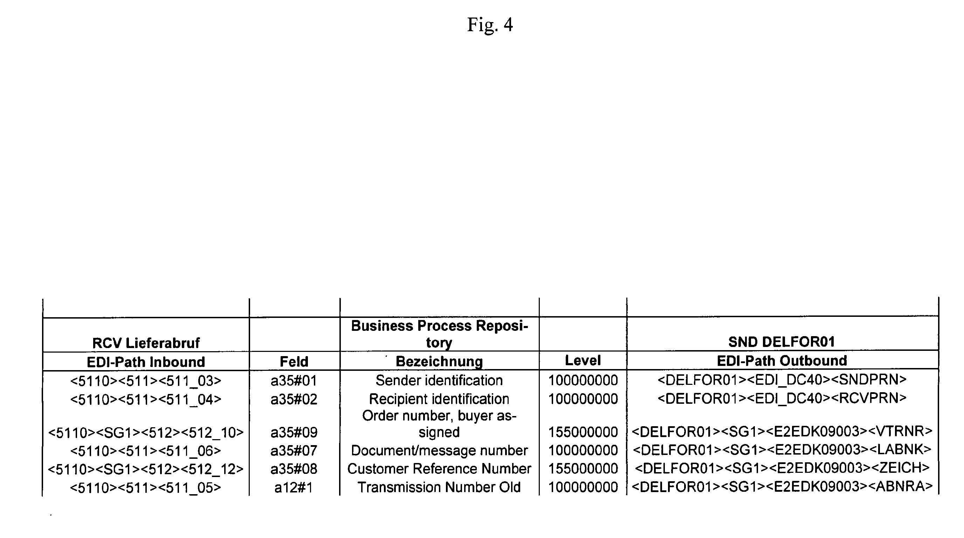

**Figure 4** shows an example of a table defining a set of mapping rules for mapping the contents of the incoming message to a different format In one embodiment of the invention, the contents may be associated with standardized fields in a central database and then written to the database, as specified by the rules.

More specifically, the first column of the table, termed "RCV Lieferabruf', defines a source field of an incoming message by stating the EDI "as" of the field of the inbound message. More particularly, each row in the first column comprises a sequence of 3D distinct numerals delimited by angular brackets, wherein the first numeral, here <5110>, describes the type of the message. Second numeral in the sequence, e.g. <511>, describes the "Satzart" (record type). The third numeral in sequence, e.g. <511_03>, designates the data element or field within the structure of the source message.

The second column, term "business process repository", rising three sub-columns "Feld, Bezeichnung" and "Level" defines the target, to which the source information is to be mapped. More particularly, the column termed "Feld" defines for each field in the source message having a particular EDI-path described in a row of column 1 to which field in the target structure the information is to be mapped. E.g., the content of the field designated by the EDI-path <5110<<511><511_03> is mapped to field "a35#01". The second column, termed "Bezeichung" comprises a natural language description of the meaning of the field defined in the second sub-column. The third sub-column defines a so-called "hierarchy level", which is a further aspect of the target structure, not relevant to the invention.

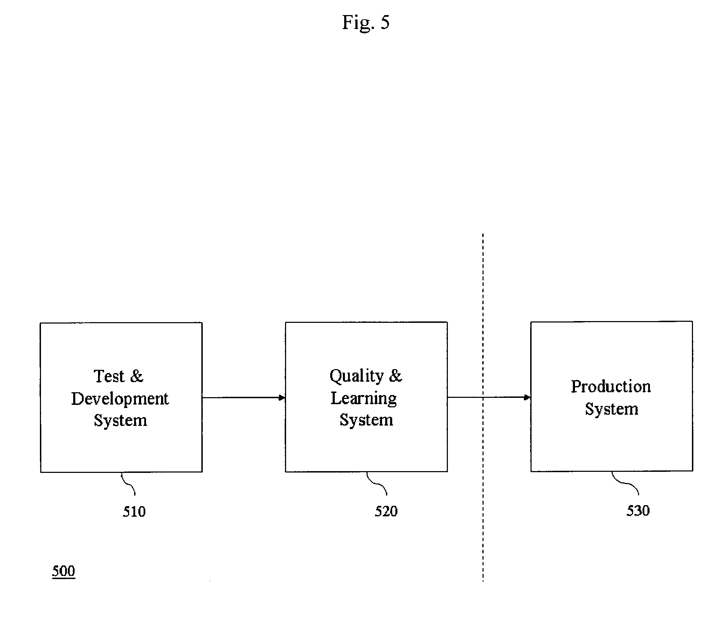

**Figure 5** shows an architecture 500 of an application system for converting messages according to an embodiment of the invention.

The architecture comprises three individual systems 510, 520 and 530. A test and development system 510 may be used for learning individual formats and associating them with a set of transformation rules. A quality and learning system **520** may be used for learning the format learned in the first system, in the context of all other already known formats.

Finally, a production system **530** may be used as an actual production system that inherits the knowledge derived in the second system **520.**

### SUMMARY/APPLICATION

Using the above-described method and system according to the invention allows processing input messages and data for which no converter profile exists in the database, if the system knows the pattern of the message or data. Therefore, copies of workflows are not needed in the inventive system.

If the inventive system is given data or messages whose format is not already known, then it is able to derive a most similar format.

If the inventive system has acquired a new format, it may automatically recognise and process it from this moment on.

## Claims

1. Computer-implemented method for converting messages between different data formats in a network for electronic data interchange (EDI), comprising the steps:
- receiving (110) an electronic message from a participant of the network;
- determining (120) at least one first possible data format of the electronic message, based on the content of the electronic message;
- validating (130) the electronic message, based on the at least one first possible data format; and
- converting (140) the message from the first data format into a second predetermined data format, if the validating step succeeds.

2. The method according to claim 1, wherein a plurality of first possible data formats is determined and each possible data format of the plurality is validated.

3. The method according to claim 1, wherein the at least one possible data format is determined from a machine-readable non-volatile memory comprising a multitude of possible data formats.

4. The method according to claim 1, wherein the data format is determined based on a proper subset of bits of the electronic message, having a predetermined size.

5. The method according to claim 4, wherein the proper subsets of bits is an initial bit sequence of the electronic message.

6. The method according to claim 1, wherein the data format is further determined based on statistical evaluations of the electronic message.

7. The method according to claim 1, wherein the first possible data format of the electronic message is determined using a neural network.

8. The method according to claim 1, further comprising the step of storing an association of the participant and the first data format in a machine-readable non-volatile memory for future reference, if the validating step succeeds.

9. The method according to claim 8, wherein the step of determining comprises the steps of:
- checking, whether an association of the participant and an associated data format has already been stored in the machine-readable non-volatile memory; and
- using the associated data format as the at least one possible data format of the electronic message, if yes.

10. The method according to claim 1, wherein the step of validating comprises the steps of:
- automatically requesting the participant to confirm the first data format via an electronic communication channel;
- validating the electronic message, if the first data format is confirmed by the participant.

11. The method according to claim 3, wherein the step of converting comprises the steps of:
- retrieving a predetermined message mapping scheme associated with the first data format; and
- applying the predetermined message mapping scheme to the electronic message in order to convert it into the second data format.

12. System for converting messages between different data formats in a network for electronic data interchange (EDI), comprising a back-end server and a front-end server, the front-end server comprising:
- means for receiving an electronic message from a participant of the network;
- means for determining at least one first possible data format of the electronic message;
- means for validating the electronic message, based on the at least one first possible data format; and
- means for converting the message from the first data format into a second predetermined data format, if the validating step succeeds.
